Europäisches Patentamt

European Patent Office

Office européen des brevets

(11) Publication number: **0 349 106**
**A1**

## EUROPEAN PATENT APPLICATION

(21) Application number: 89304426.3

(22) Date of filing: 03.05.89

(51) Int. Cl.⁴: **H04N 5/782 , H04N 7/18 , G08B 13/18**

(30) Priority: 27.06.88 GB 8815214

(43) Date of publication of application:
**03.01.90 Bulletin 90/01**

(84) Designated Contracting States:
**AT BE CH DE ES FR GR IT LI LU NL SE**

(71) Applicant: **BRITISH BROADCASTING CORPORATION**
**Broadcasting House**
**London W1A 1AA(GB)**

(72) Inventor: **Rackowe, Jonathan Miles**
**1 Latham Close**
**Beckton London E6 4SF(GB)**

(74) Representative: **Pears, David Ashley et al**
**REDDIE & GROSE 16 Theobalds Road**
**London WC1X 8PL(GB)**

(54) **Interactive video system with a video event detector.**

(57) The composite video, burst and syncs (CVBS) signal from a video cassette recorder is filtered (22) to remove chominance and high frequency luminance, black-level clamped (24, 26) and applied to an integrator (28). The integrator output is converted (30) to digital values which are analysed by a computer to detect events, essentially new shots, when the integrator output changes significantly. In a first mode the time intervals between the events may be recorded in a table which forms a kind of index to the video cassette. In a second mode the table is searched by a computer to match a sequence of time intervals therein with the time intervals between the most recent detected events. This enables the computer to synchronize its operations to the video, specifically to synchronize the display of related material on the computer screen.

*FIG.2*

```
    20          22          26          28          30            32
 ┌────────┐  ┌────────┐  ┌────────┐  ┌──────────┐  ┌──────────┐  ┌────────┐
 │ INPUT  │  │        │  │        │  │          │  │ ANALOGUE │  │ DATA   │
 │        │→ │ FILTER │→ │ CLAMP  │→ │INTEGRATOR│→ │TO DIGITAL│→ │ OUTPUT │
 │ BUFFER │  │        │  │        │  │          │  │CONVERTER │  │ BUFFER │
 └────────┘  └────────┘  └────────┘  └──────────┘  └──────────┘  └────────┘
     ↑                      ↑                                        │
   CVBS                ┌──────────┐  24                           ↓
   INPUT              │  SYNC    │                              DATA
                      │SEPARATOR │                              OUTPUT
                      └──────────┘
```

## IMPROVEMENTS RELATING TO INTERACTIVE VIDEO SYSTEMS

In most interactive systems the source of video images (e.g. the video disc player) follows the computer. The computer holds picture indexes and can take the user to any image at will by controlling the picture source. This allows the fullest form of interactivity, where the program enables the user to jump to any point in the picture sequence.

There is, however, one important form of interactivity which does not depend on this branching possibility - the linear video programme with interactive footnotes. An example would be a Shakespeare play, where the viewer wants to watch the scenes in order, but would like all kinds of extra information en route. This is just as much a true interactive experience as a branching program. Indeed many producers believe that the experience of watching this kind of sustained linear sequence is essential for real emotional involvement. This is at present difficult to achieve even with the most expensive video disc equipment because of the limited disc playing time.

The broad object of the present invention is to enable an interactive system to be achieved easily with the level of technology that all schools and many individuals already have. The viewer could watch the video on a standard TV with VCR. Alongside the armchair would be a standard micro computer with a screen providing the "footnotes" from floppy discs. These "footnotes" could be anything from explanatory text that could be pasted into the user's own notebook, to a dictionary of unfamiliar terms, explanatory diagrams or historical maps.

What is needed to make this possible is a form of simple link to keep the micro in step with the video, not only in play mode, but also following a pause, rewind or fast forward. This should be as simple as possible and work with standard cassette recordings played on standard VCRs.

The present invention provides a video event detector and an interactive video system as defined in the appended claims.

In carrying out the invention we may proceed as follows.

The publisher offers video material on standard video cassettes or will expect the user to record this themselves from a broadcast. The interactive program is offered on one or more floppy discs.

This program has four main functions:
* to maintain synchronization with the video.
* to provide a branching menu system to choose appropriate footnotes, commentary or related reference material to the video scenes being played.
* to supply the text, graphics, statistics or program modules relevant to each video scene.
* to interface with the user's own notepad, database, spreadsheet, outliner or word-processor.

So, for example, the user might buy a video cassette of Hamlet and a set of 2 floppies for a particular micro-computer which is plugged into a small interface box which in turn plugs into the video-out socket on the VCR.

First the user runs the program from floppy 1 within the computer and can watch the cassette from anywhere within the play. The computer program matches the shot-change information with the pattern it already holds and quickly finds the right place. Now it offers the user the choice of footnotes for the scene he is watching. If the scene is in the second half of the play it cues the user to change to floppy 2.

If the user pauses the VCR with the remote control in order to work with these footnotes and perhaps copy something into a notepad file, then synchronization is maintained when the user restarts the video. If he rewinds or fast-forwards the tape, then it will take 2 to 6 shot changes, depending on the uniqueness of the sequence, before the program knows where the user is. In practice this means that the user will always deliberately overshoot the desired scene by a few shots in order to pick up synchronization.

The video-event detector according to the invention has the important advantage that cueing information is derived from standard video cassettes, or broadcasts. It is of course necessary to standardise the detector parameters carefully so that the same sequence of events is generated both when the event table is being compiled and when this is being used to effect synchronization under control of the signals from a user's event detector.

The invention will be described in more detail, by way of example, with reference to the accompanying drawings, in which:

Fig. 1 is a block diagram of an interactive video system, and

Fig. 2 is a block diagram of an event detector.

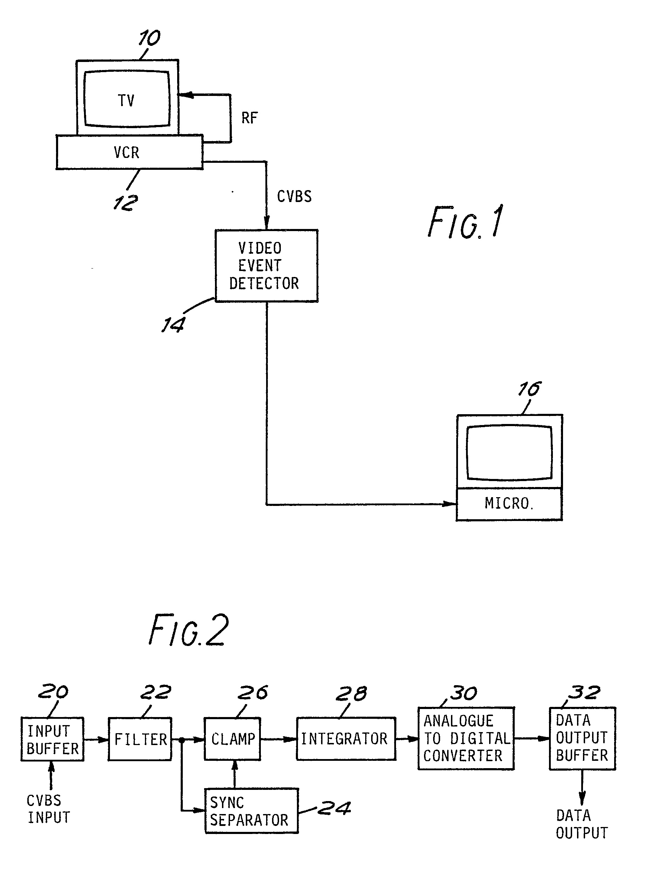

Fig. 1 shows a television receiver 10 connected to the RF output of a VCR 12. The VCR also provides a standard composite video, burst and syncs (CVBS) signal which is applied also to a video event detector 14 which is in turn connected to a home micro 16 with a floppy disc drive. The VCR 12 has a remote control unit 18 for selecting play, pause, rewind, fast forward, etc.

The detector 14 provides a sequence of video-related events for synchronization of the computer program. A composite video signal does have synchronizing pulses but unfortunately these cannot be read from a video tape machine (eg VHS) while it is shuttling the tape. It has therefore been necessary to devise a way of simply identifying a video signal.

The detector 14 works by taking as input the standard CVBS signal and producing as output a parallel data stream consisting of a varying binary number which indicates the average picture level (apl) of the video input. This output it processed by the computer to produce a sequence of video events, where an event is defined as a significant long-term change in average picture level (apl). The magnitude of a change which qualifies as "significant" is determined empirically and laid down as a parameter of the system. Similarly the duration of a change which qualifies as "long term" is determined empirically and specified as a fixed parameter.

In use the unit is connected to the CVBS output of the video source (eg VHS machine) and to a personal computer. A first play through of a piece of video produces, from suitable computer software, a sequence of events which may be stored as a look-up table. The first play through to produce the look up table would be done by the persons producing the "footnotes" computer program. The look up table would be supplied to the user on the same floppy disk as the "footnotes" program. Subsequent playing of any portion of the same video by a user produces a sequence of events which the computer can compare with the look-up table in order to achieve synchronization.

In the event detector 14 the CVBS input (1v p-p CVBS) is first buffered (buffer 20) to provide a high input impedance. This permits a loop through output where required so that the unit may be inserted in a signal path. The chrominance and high-frequency luminance information is removed by a low-pass filter 22 with turnover at approximately 500KHz. The synchronizing pulses are separated (separator 24) from the filtered signal and from these syncs, clamp pulses are derived for use in a clamp 26. The filtered CVBS signal is clamped to Black-level using the pulses from the sync separator. A relatively soft clamp 26 is used to avoid clamping-in any noise, e.g. with a time constant of 270 us. The clamped signal is integrated (integrator 28) over time to produce an average picture level (apl) signal integrated over several frames. The integration time constant is determined empirically but may be 470 ms. An analogue to digital converter (ADC) 30 is used to produce a digital number representing the instantaneous value of the integrated apl signal. The ADC output is buffered (buffer 32) and processed as necessary for the computer. This buffer/interface may vary depending on the particular computer used; both the ADC 30 and buffer 32 may be part of the computer.

The computer used in the above-mentioned first play through continuously monitors the digital apl and, whenever there is a significant long-term change, it records the time interval to this new event from the preceding event in the look-up table whose index field consists of the sequence of inter-event intervals thus recorded. Associated with at least some values in the table will be pointers to the associated software recorded on the same disc as the table. Short sequences of inter-event values will be unique in the table. Some 2-value sequences will be unique and very many 3-value sequences will be unique.

At the user system, the digital apl values entering the computer from the detector 14 are analysed to determine the inter-event value whenever there is a significant, long-term change. The most recent values are stored and the computer searches the event table to match the stored sequence with a sequence in the table. As soon as a match is found, the computer accesses the software pointed to and produces the appropriate screen display. For interactive purposes the computer also accepts user inputs, e.g. for menu selections.

The table created in the first run forms a kind of index to the video cassette and which is used in subsequent runs to synchronize interactive computer material to the video.

.In the embodiment described a match is achieved by comparing times between events off tape with time intervals stored in the look-up table. It is envisaged that for some applications more sophisticated software might be used which compared time intervals plus digital apl values with time intervals plus values from the look-up table. However, it is primarily the time interval not the ADC value which is important. Computers permit real-time measurement using their in-built clocks.

As well as being a cheap system for both publisher and viewer and one that depends only on already-owned technology, the system described has a further major advantage: it can be broadcast. The video side can be downloaded onto VCR. The digital material could be downloaded from telesoftware. This could be an ideal arrangement for schools.

## Claims

1. A video event detector comprising means for clamping (24, 26) and continuously integrating (28, 30) a video signal, means (16) for detecting changes in the integrated signal exceeding a predetermined amount, and means (16) for storing the time intervals occurring between the detection of successive changes.

2. A video event detector according to claim 1, characterized in that the integrating means comprises an analog integrator (28) whose output is connected to an analog to digital converter (30), and in that the detecting means comprise a computer (16) operative to detect the said changes in the succession of digital values provided by the analog to digital converter (30) and the storing means comprise the computer (16) and means including a real time clock, controlled by the computer to store the time intervals between the particular integrated signal values.

3. A video event detector according to claim 2, characterized in that the computer (16) causes the time intervals between all the particular integrated signal values to be stored in a table and is programmed to associate points with at least some of the time intervals in the table.

4. A video event detector according to claim 3, characterized in that the computer (16) stores the table and pointers on a recording medium.

5. A video event detector according to claim 2, characterized in that the computer (16) causes the most recent said time intervals to be stored and is programmed to search for a matching sequence of time intervals in a stored table and to implement operations in correspondence with the matching sequence of values.

6. A video event detector according to claim 4, characterized in that the stored table and software defining the operations to be implemented are stored on a recording medium.

7. An interactive video system comprising a video event detector (14) according to claim 1, a video cassette recorder (12) for playing back a video cassette to generate a video signal for a television receiver (10) the said detector (14) being connected to receive the video signal (CVBS).

8. A system according to claim 7, characterized in that the detecting means (16) comprises a computer arranged to store the most recent time intervals between particular integrated signal values and programmed to search for matches between these intervals and sequences of intervals stored in a table read by the computer from a floppy disc storage medium.

## FIG.1

TV

RF

VCR

*10*

*12*

CVBS

VIDEO
EVENT
DETECTOR

*14*

MICRO.

*16*

## FIG.2

INPUT
BUFFER

*20*

FILTER

*22*

CLAMP

*26*

INTEGRATOR

*28*

ANALOGUE
TO DIGITAL
CONVERTER

*30*

DATA
OUTPUT
BUFFER

*32*

CVBS
INPUT

SYNC
SEPARATOR

*24*

DATA
OUTPUT

| | **DOCUMENTS CONSIDERED TO BE RELEVANT** | | | EP 89304426.3 |
|---|---|---|---|---|
| Category | Citation of document with indication, where appropriate, of relevant passages | | Relevant to claim | CLASSIFICATION OF THE APPLICATION (Int. Cl.4) |
| X | <u>GB - A - 2 055 495</u> (BRITISH) * Fig. 1; page 1, lines 28-57; page 1, line 117 - page 2, line 6 * -- | | 1 | H 04 N 5/782 H 04 N 7/18 G 08 B 13/18 |
| A | <u>GB - A - 2 031 686</u> (MICRO) * Fig. 6; page 2, lines 60-74 * -- | | 1 | |
| A | <u>EP - A2 - 0 158 293</u> (EPSILON) * Abstract; fig. 1 * -- | | 1 | |
| A | <u>US - A - 4 390 904</u> (JOHNSTON) * Fig. 1-3; column 6, line 34 - column 7, line 56 * -- | | 1 | |
| Y | <u>US - A - 4 641 203</u> (MILLER) * Column 1, line 11 - column 2, line 42; fig. 2; claims * ---- | | 7 | **TECHNICAL FIELDS SEARCHED (Int. Cl.4)** H 04 N 5/00 H 04 N 7/00 H 04 N 9/00 G 08 B 13/00 |

The present search report has been drawn up for all claims

| Place of search VIENNA | Date of completion of the search 06-09-1989 | Examiner DIMITROW |
|---|---|---|